# EUROPEAN PATENT APPLICATION

(11) **EP 4 525 510 A1**
(43) Date of publication of application: **19.03.2025**
(21) Application number: 24198250.3
(22) Date of filing: 03.09.2024
(51) Int. Cl.: H04W 28/02

(54) **COMMUNICATION CONTROL DEVICE, COMMUNICATION CONTROL METHOD, NON-TRANSITORY STORAGE MEDIUM, AND USER EQUIPMENT**

(30) Priority: 15.09.2023 JP 2023149943
(71) Applicant: TOYOTA JIDOSHA KABUSHIKI KAISHA, Aichi-ken, 471-8571 (JP)
(72) Inventor: LEE, Chunghan, Toyota-shi, Aichi-ken, 471-8571 (JP); OMI, Satoshi, Toyota-shi, Aichi-ken, 471-8571 (JP); ZHONG, Lei, Toyota-shi, Aichi-ken, 471-8571 (JP); ABE, Hiroshi, Toyota-shi, Aichi-ken, 471-8571 (JP); FURUSAWA, Toru, Toyota-shi, Aichi-ken, 471-8571 (JP)
(74) Representative: Simmons & Simmons

(57) **Abstract**

A communication control device (20) includes a processor (31) configured to perform communication throttling for a plurality of user equipments (10) when at least one of determinations is made. The determinations include the number of the user equipments (10) connected to a base station (2) being equal to or greater than a threshold, occurrence of congestion in the base station (2), and occurrence of traffic congestion in an area to which the base station (2) belongs.

## Description

### BACKGROUND OF THE INVENTION

### 1. Field of the Invention

The present disclosure relates to communication control devices, communication control methods, a non-transitory storage medium, and a user equipment.

### 2. Description of Related Art

There is a processing device that, based on UE count information indicating the number of user equipments (UEs) equipped with a subscriber identify module (SIM) card and connected to a base station, outputs a signal including information for reducing crowding of people in a coverage area of a wireless communication line independent of a mobile communication service provided by a telecommunications carrier (Japanese Unexamined Patent Application Publication No. 2022-179921 (JP 2022-179921 A)). As related art, there are techniques described in Japanese Unexamined Patent Application Publication (Translation of PCT Application) No. 2017-516381 (JP 2017-516381 A) and Japanese Unexamined Patent Application Publication No. 2005-176066 (JP 2005-176066 A).

### SUMMARY OF THE INVENTION

The present disclosure provides a communication control device, communication control method, a non-transitory storage medium, and a user equipment that can reduce power consumption related to communication.

A first aspect of the present disclosure is a communication control device characterized including a processor. The processor is configured to perform communication throttling for a plurality of user equipments when the processor makes at least one of determinations is made. The determinations include the number of the user equipments connected to a base station being equal to or greater than a threshold, occurrence of congestion in the base station, and occurrence of traffic congestion in an area to which the base station belongs.

In the first aspect, the processor may be configured to reduce the number of the user equipments connected to the base station by the communication throttling.

In the first aspect, the processor may be configured to determine the user equipment to be kept connected to the base station, based on information indicating either or both of distances between the base station and each of the user equipments, and communication qualities between the base station and each of the user equipments.

In the first aspect, the processor may be configured to reduce a frequency of communication between the user equipment subject to the communication throttling and the base station.

In the first aspect, the processor may be configured to reduce the frequency of the communication of first information. The first information may be at least one piece of information selected from the following pieces of information: information related to advanced driver-assistance systems of a vehicle on which the user equipment is mounted; information that is less important or urgent; information that is less relevant to a location of the vehicle on which the user equipment is mounted; and information whose freshness is not important.

In the first aspect, the processor may be configured to give, to a first user equipment selected from the user equipments, an instruction or request to reduce a frequency of sending information from the first user equipment to the base station.

In the first aspect, the communication throttling may be configured to be performed within a range in which a quality of service determined for the user equipment is maintained.

In the first aspect, the processor may be configured to perform the communication throttling for non-real-time data.

In the first aspect, the processor may be configured to send, to at least one user equipment kept connected to the base station, an instruction or request to send information received from the base station to the user equipment disconnected from the base station, through direct communication between the user equipments.

A second aspect of the present disclosure is a communication control method. The communication control method includes performing communication throttling for a plurality of user equipments by a communication control device when at least one of determinations is made. The determinations include the number of the user equipments connected to a base station being equal to or greater than a threshold, occurrence of congestion in the base station, and occurrence of traffic congestion in an area to which the base station belongs.

In the second aspect, the communication control method may include reducing the number of the user equipments connected to the base station by the communication throttling by the communication control device.

In the second aspect, the communication control method may include determining the user equipment to be kept connected to the base station by the communication control device, based on information indicating either or both of distances between the base station and each of the user equipments, and communication qualities between the base station and each of the user equipments.

In the second aspect, the communication control method may include reducing a frequency of communication between the user equipment subject to the communication throttling and the base station by the communication control device.

In the second aspect, the communication control method may include reducing the frequency of the communication of first information by the communication control device. The first information may be at least one piece of information selected from the following pieces of information: information related to advanced driver-assistance systems of a vehicle on which the user equipment is mounted; information that is less important or urgent; information that is less relevant to a location of the vehicle on which the user equipment is mounted; and information whose freshness is not important.

In the second aspect, the communication control method may include giving, from the communication control device to a first user equipment selected from the user equipments, an instruction or request to reduce a frequency of sending information from the first user equipment to the base station.

In the second aspect, the communication throttling may be performed within a range in which a quality of service determined for the user equipment is maintained.

In the second aspect, the communication control method may include performing the communication throttling for non-real-time data by the communication control device.

In the second aspect, the communication control method may include sending, from the communication control device to at least one user equipment kept connected to the base station, an instruction or request to send information received from the base station to the user equipment disconnected from the base station, through direct communication between the user equipments.

A third aspect of the present disclosure is a non-transitory storage medium storing instructions that are executable by one or more processors and that cause the one or more processors to perform the communication control method.

A fourth aspect of the present disclosure is a user equipment including a processor. The processor is configured to receive information from a base station, and send, through direct communication between a plurality of the user equipments, the information received from the base station to at least one user equipment disconnected from the base station out of the user equipments by communication throttling. The user equipment is selected as a user equipment to be kept connected to the base station from the user equipments when at least one of determinations is made. The determinations include the number of the user equipments connected to the base station being equal to or greater than a threshold, occurrence of congestion in the base station, and occurrence of traffic congestion in an area to which the base station belongs.

Other aspects of the present disclosure may include an information processing system including the communication control device, and a program that causes a computer to operate as the communication control device.

According to the above aspects of present disclosure, it is possible to reduce power consumption related to communication.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows an example of the configuration of a communication system according to an embodiment;
FIG. 2A shows an example of the configuration of a communication control device;
FIG. 2B shows an example of the configuration of a UE;
FIG. 3 is a flowchart of an example of a process in the communication control device; and
FIG. 4 is a flowchart of an example of a process in the UE.

### DETAILED DESCRIPTION OF EMBODIMENTS

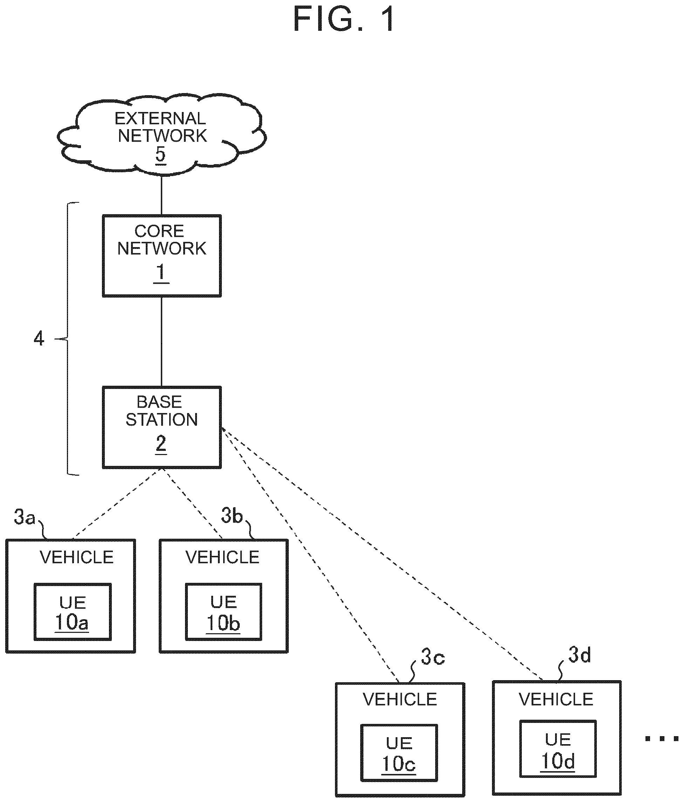

An embodiment of a communication control device and communication control method will be described with reference to the drawings. The configuration of the embodiment described below is illustrative, and the present disclosure is not limited to the configuration of the embodiment. FIG. 1 shows an example of a communication system according to the embodiment. The communication system includes: a cellular network 4 composed of a core network 1 and a base station 2; a plurality of user equipments (UEs) 10 connected to the base station 2; and an external network 5 connected to the core network 1.

In FIG. 1, UEs 10a, 10b, 10c, and 10d are illustrated as an example of the UEs 10 connected (in a connected state) to the base station 2. It is herein assumed that the distance between each UE 10c, 10d and the base station 2 is greater than the distance between each UE 10a, 10b and the base station 2 (the UEs 10c, 10d are located farther from base station 2 than the UEs 10a, 10b). In the following description, the UEs 10a to 10d will be simply referred to as "UE 10" or "UEs 10" when they are not distinguished from each other.

The UE 10 is a terminal of a user (subscriber) of a communication service using the cellular network 4. The UE 10 can be connected to the base station 2 to communicate with its communication partner through the cellular network 4. The UEs 10a to 10d are mounted on vehicles 3a, 3b, 3c, and 3d, respectively. The vehicles 3a to 3d will be simply referred to as "vehicle 3" or "vehicles 3" when they are not distinguished from each other. The UE 10 is not necessarily be mounted on the vehicle 3. The UE 10 may be installed on the vehicle 3, may be detachably mounted on the vehicle 3, or may be merely placed inside the vehicle 3.

The following description illustrates an example in which the cellular network 4 is a fifth-generation (5G) network. The base station 2 is an access network (radio access network (RAN)) of the core network 1. A base station in 5G is called a gNB. The cellular network 4 may be a wireless local area network (LAN) (including Wi-Fi). In this case, the base station 2 is an access point in the wireless LAN, and the core network 1 is a public network.

The core network 1 is called a 5G core (5GC). The core network 1 includes functions (also referred to as entities or network nodes) related to a control plane and functions (entities) related to a user plane. The entities related to the control plane include Access and Mobility Management Function (AMF), Session Management Function (SMF), Policy Control Function (PCF), Network Exposure Function (NEF), Network Repository Function (NRF), Network Slice Selection Function (NSSF), Authentication Server Function (AUSF), Unified Data Management (UDM), and Network Data Analytics Function (NWDAF).

The AMF is a serving device for the UEs 10 in the 5GC (core network 1). The AMF accommodates the RAN (base station 2) and performs subscriber authentication, location (mobility) management for the individual UEs 10, etc. The UDM provides subscriber information or acquires, registers, deletes, and changes the states of the individual UEs. The SMF manages protocol data unit (PDU) sessions and controls a user plane function (UPF) to perform quality of service (QoS) control and policy control. A PDU session is a virtual communication channel for data transfer between the UE and a data network (DN) that is the external network 5, and is established between the UE and the UPF. The external network 5 (DN) is a data network outside the 5GC (such as the Internet). The PCF performs QoS control, policy control, charging control, etc. under the control of the SMF. The QoS control is communication quality control such as priority packet transfer. Communication control based on network or subscriber information, such as QoS, packet transfer handling, and charging, is performed as the policy control.

The 5GC includes the UPF as an entity (network node) related to the user plane. The UPF performs routing and forwarding, inspection, and QoS handling of user packets (user plane packets that are transmitted and received by the UE 10).

When the cellular network 4 is a long-term evolution (LTE) (4G) network, the base station 2 is called an eNB. The core network 1 is called an evolved packet core (EPC). The EPC includes, as entities (network nodes) related to the control plane, Mobility Management Entity (MME), Serving Gateway (SGW), Packet Data Network Gateway (PGW), Home Subscriber Server (HSS), Policy and Charging Rule Function (PCRF), Online Charging System (OCS), and Offline Charging System (OFCS).

The MME performs various controls such as subscriber management and equipment location management (mobility control). The SGW is a gateway accommodating the base station 2. The PGW is a gateway connected to the external network 5. Subscriber information and equipment location information are registered in the HSS. The HSS also performs user (UE) authentication. The PCRF sets network policies (such as conditions of network use and conditions of network operation (e.g., priority control), or charging rules). The OCS is an online charging system, and the OFCS is an offline charging system.

For example, the UE 10 may be a Data Communication Module (DCM) that is an example of an in-vehicle terminal mounted on a vehicle. The UE 10 can collect information on the vehicle (data regarding driving of the vehicle such as location and vehicle speed) from in-vehicle devices (e.g., a car navigation device, a drive recorder, and an electronic control unit (ECU)). The UE 10 can also collect data regarding communication of the vehicle (in-vehicle terminal). Data (user data) sent from the UE 10 is sent to a predetermined communication partner (e.g., a server device connected to the external network 5) via the cellular network 4.

The base station 2 and the core network 1 perform communication control such as registering the location of the UE 10, setting a route for data (packet) transfer between the UE 10 and its communication partner, and managing the quality of service (QoS). The base station 2 may be composed of at least one computer configured to communicate wirelessly. The core network 1 may be either one computer or a collection (cloud) of two or more computers that operates as the above entities. Each computer forming the base station 2 and the core network 1 operates as a communication control device 20 that performs various controls related to communication of the UEs 10.

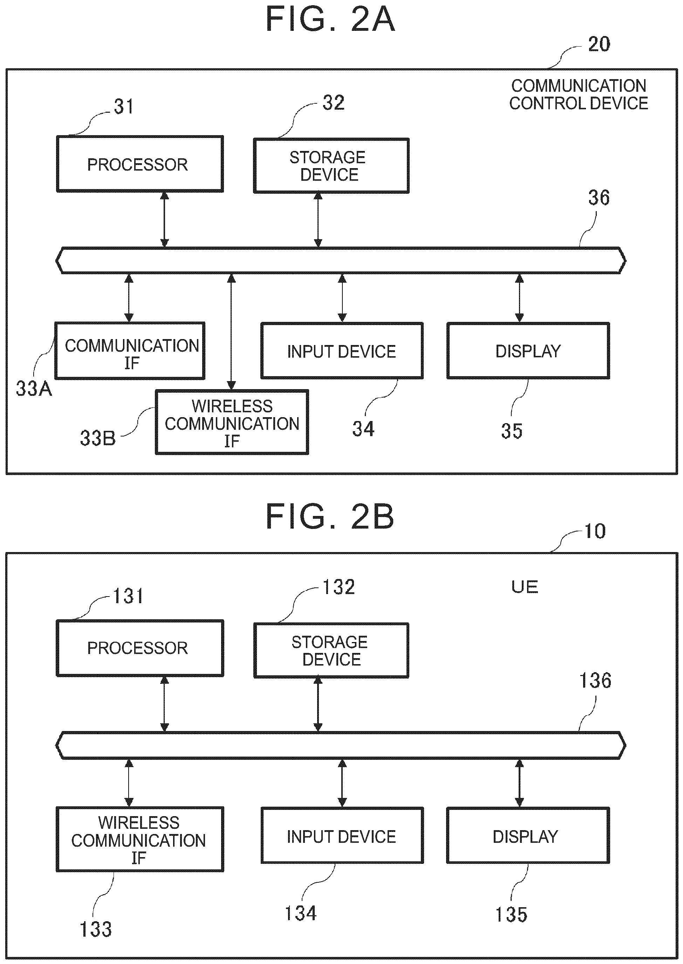

FIG. 2A shows an example of the configuration of the communication control device 20 (computer that operates as the communication control device 20). FIG. 2B shows an example of the configuration of the UE 10. In FIG. 2A, the communication control device 20 includes, as an example, a processor 31, a storage device 32, a communication interface (communication IF) 33A, a wireless communication interface (wireless communication IF) 33B, an input device 34, and a display 35. These components of the communication control device 20 are connected to each other via a bus 36.

The storage device 32 stores various programs and data. The processor 31 is an example of a control unit (controller), and is, for example, a central processing unit (CPU), a digital signal processor (DSP), a graphics processing unit (GPU), or a combination thereof. The processor 31 executes the programs stored in the storage device 32 and performs various processes such as calculations or processing using the data stored in the storage device 32 etc. By executing the programs, the communication control device 20 can perform various controls related to communication of the UEs 10. The communication IF 33A is a communication interface circuit for a wired network, and the wireless communication IF 33B is used for wireless communication with the UEs 10 etc. The input device 34 is a button, keys, touch panel, etc. that are used for entering information, performing settings, etc. The display 35 is used to display information. The wireless communication IF 33B is a component included in the communication control device 20 when the base station 2 includes the communication control device 20. The wireless communication IF 33B may not be included in the communication control device 20 in the core network 1.

In FIG. 2B, the UE 10 includes, as an example, a processor 131, a storage device 132, a wireless communication IF 133, an input device 134, and a display 135. These components of the UE 10 are connected to each other via a bus 136. These components have the same functions as the processor 31, the storage device 32, the wireless communication IF 33B, the input device 34, and the display 35, although there are differences in performance and type. The processor 131 is an example of a control unit (controller), and can perform various processes by executing programs stored in the storage device 132.

In the communication system shown in FIG. 1, traffic congestion of vehicles 3 etc. may create a situation where a plurality of UEs 10 is connected to a base station 2 located in (belonging to) the area with the traffic congestion. When a large number (plurality) of UEs 10 are connected to the base station 2, it causes congestion in the base station 2. This increases the load on the base station 2 and the core network 1, resulting in an increase in power consumption related to communication. A process that can cut (reduce) power consumption when a plurality of UEs 10 is connected to the base station 2 will be described in the embodiment.

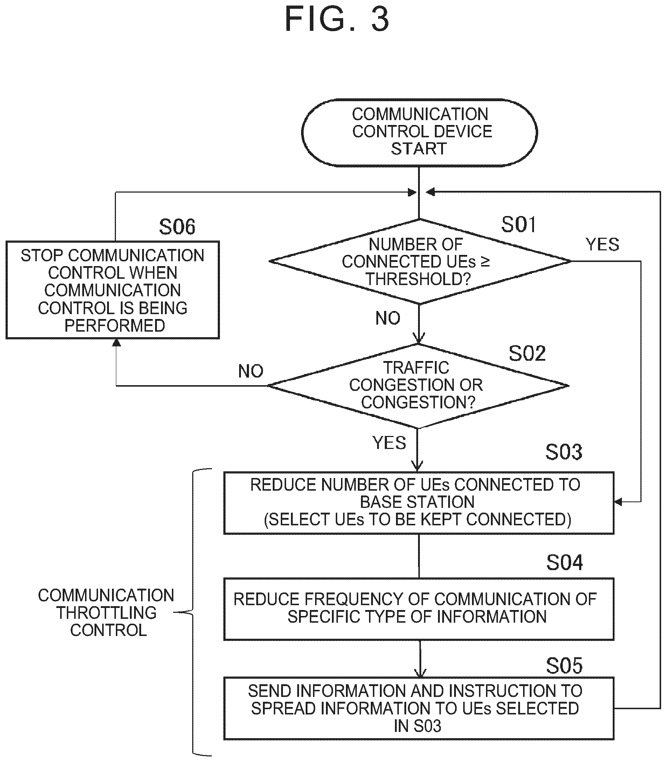

FIG. 3 is a flowchart of an example of a process in the communication control device 20 in the base station 2 or the core network 1. The process shown in FIG. 3 is performed by the processor 31 of the communication control device 20 in the base station 2. However, the process shown in FIG. 3 may be performed by the processor 31 of the communication control device 20 in the core network 1.

In step S01, the processor 31 determines whether the number of UEs 10 connected (in a connected state) to the base station 2 is equal to or greater than a predetermined threshold. When the processor 31 determines that the number of connected UEs 10 is equal to or greater than the threshold, the process proceeds to step S03. Otherwise, the process proceeds to step S02.

In step S02, the processor 31 determines whether traffic congestion has occurred in the area (geographical area) where the base station 2 is located (belongs) or whether congestion has occurred in the base station 2. For example, the communication control device 20 in the core network 1 monitors the presence or absence of either or both of traffic congestion in the area to which the base station 2 belongs and congestion in the base station 2, and sends information indicating the presence or absence of traffic congestion and congestion to the base station 2. The processor 31 of the base station 2 stores the information indicating the presence or absence of traffic congestion and congestion in the storage device 32. In step S02, the processor 31 refers to the information indicating the presence or absence of traffic congestion and congestion stored in the storage device 32, and determines whether traffic congestion or congestion has occurred. When the processor 31 determines that traffic congestion or congestion has occurred, the process proceeds to step S03. Otherwise, the process proceeds to step S06.

The determination in step S02 may be made regarding either traffic congestion or congestion. The order of steps S01, S02 may be reversed, or one of them may be omitted.

In steps S03, S04, and S05, the processor 31 perform communication throttling control on all of the connected UEs 10. In step S03, the processor 31 performs a process of reducing the number of UEs 10 (vehicles 3) connected to the base station 2. For example, the processor 31 selects the UEs 10 that can communicate with the base station 2, based on the distances between the base station 2 and the individual UEs 10 stored in the storage device 32.

For example, the core network 1 manages location information of each UE 10 (stored in the storage device 32 etc.). The processor 31 in the base station 2 receives the location information (e.g., location coordinates) of the individual UEs 10 from the core network 1, and calculates the straight line distances between the base station 2 and the individual UEs 10 using the location coordinates of the individual UEs 10 and the location coordinates of the base station 2. The processor 31 divides the distances into several levels based on their lengths, and determines those UEs 10 corresponding to the longest distance level to be the ones to be subject to communication throttling. When the number of remaining UEs 10 is still larger than a predetermined value, the processor 31 determines those UEs 10 corresponding to the second longest distance level to be the ones to be subjected to communication throttling. The processor 31 can reduce the number of UEs 10 to be kept connected to the base station 2 to the predetermined value or less by disconnecting those UEs 10 to be subjected to communication throttling from the base station 2.

Alternatively, the processor 31 may select a predetermined number of UEs 10 to be kept connected to the base station 2 in ascending order of distance from the base station 2. For example, of the UEs 10a to 10d shown in FIG. 1, the UEs 10a, 10b can be kept connected to the base station 2, and the UEs 10c, 10d whose distance to the base station 2 is longer than the UEs 10a, 10b can be disconnected from the base station 2 (their connection to the base station 2 can be terminated). Power consumption can be reduced by reducing the number of connected UEs 10 in this manner. The greater the distance from the base station 2, the larger the power consumption required for suitable communication. Therefore, disconnecting those UE 10 determined to be located far away from the base station 2 can increase the amount of reduction in power consumption.

Information indicating communication quality may be used instead of the distance. For example, the processor 31 acquires information indicating the communication qualities regarding the individual UEs 10. The processor 31 can select those UE 10 to be kept connected to the base station 2 or those UE 10 to be disconnected from the base station 2 based on the information indicating communication qualities. For example, the signal-to-noise ratio (SNR) can be used as the information indicating communication qualities. However, the information indicating communication qualities may be other than the SNR. It is common to increase transmission power in order to obtain suitable communication quality. Therefore, disconnecting those UE 10 with poor communication quality (low SNRs) from the base station 2 can increase the amount of reduction in power consumption. Those UEs 10 to be subject to communication throttling may be selected based on a combination of the determination based on the distance and the determination based on the communication quality.

Step S04 can be performed in parallel with step S03 or selectively with step S03. In step S04, the processor 31 reduces the frequency of communication of a specific type of information (example of first information) on those UEs 10 kept connected to the base station 2.

The specific type of information is, for example, information related to advanced driver-assistance systems (ADAS) of the vehicle 3 having the UE 10 mounted thereon. The specific type of information may include information that is less important or urgent, information that is not sensitive to vehicle location information (information that is less relevant to the vehicle location), and information whose freshness is not important (e.g. weather information and service-related information). The specific type of information is not limited to these examples.

For example, it is herein assumed that a PDU session (first session) for sending and receiving the specific type of information and a PDU session (second session) for sending and receiving information other than the specific type of information have been established between the UE 10 and the external network 5 (DN). In this case, the processor 31 performs bandwidth control (bandwidth throttling: reducing the communication speed or the amount of data transfer) for the first session. The frequency of communication (data transmission) of the specific type of information can thus be reduced. Since the frequency of communication for the first session decreases, the amount of processing related to the communication is reduced, so that power consumption is reduced.

The reduction in frequency of communication may be achieved by reducing the frequency of communication in the transmission direction from the communication partner to the UE 10 via the cellular network 4 (downlink communication) or by reducing the frequency of communication in the transmission direction from the UE 10 to the communication partner via the cellular network 4 (uplink communication). Alternatively, both the frequency in the downlink direction and the frequency in the uplink direction may be reduced. The processor 31 of the base station 2 can give (send) each UE 10 selected to be subjected to communication throttling (first UE 10) from the plurality of UEs 10 an instruction or request to reduce the frequency of sending information from the first UE to the base station 2. In response to the instruction or request, the first UE reduces the frequency of sending information. Power consumption of the cellular network 4 and the UE 10 can thus be reduced.

For example, the frequency (rate) of sending ADAS-related information (information on other vehicles and objects in the vehicle's surroundings detected by the vehicle 3) from the vehicle 3 to the cellular network 4 can be reduced. This is because, when there is traffic congestion of vehicles 3, the cellular network 4 can sufficiently grasp the situation in the area with the traffic congestion even if it does not acquire data from every vehicle 3 stuck in the traffic congestion.

The specific type of information may be non-real-time data. For example, it is herein assumed that a PDU session for non-real-time data and a PDU session for real-time data have been established between the UE 10 and its communication partner. In this case, the processor 31 performs bandwidth throttling on the PDU session for non-real-time data in parallel with step S04 or instead of step S04. Such communication throttling (reduction in frequency) for non-real-time data may be performed.

The reduction in frequency of communication can be achieved not only by performing bandwidth throttling on a session-by-session basis but also by queuing packets flowing in one session (put a packet transfer on hold). For example, the following configurations can be used.

### Configuration Example 1

A plurality of transmission queues corresponding to the types of information is provided in the UE 10 or its communication partner, and the processor 31 increases the reading interval from the transmission queue storing the specific type of information (packet). In this case, the type of information can be identified using an identifier stored in the packet header (e.g., Class of Service (CoS) in VLAN, or a Type of Service (ToS) (Differentiated Services Code Point (DSCP)) field in an internet protocol (IP) packet header).

### Configuration Example 2

A dedicated session (communication channel) for sending the specific type of information is periodically established in the UE 10 or its communication partner to send the specific type of information. The processor 31 reduces the frequency (increases the interval) of establishing the dedicated session.

Configuration Example 3A node (UPF, SGW, etc.) that relays the specific type of information identifies the specific type of information from an identifier attached to head information, and increases the residence time of such a packet.

The reduction in frequency of communication may be achieved by reducing the frequency of allocating radio resources (physical resource blocks (PRBs)) for communication between the UE 10 subject to communication throttling and the base station 2.

Communication throttling such as bandwidth throttling may be performed within a range in which the QoS set for the communication (session) between the UE 10 and its communication partner in a state in which no communication throttling is performed is maintained.

In step S05, the processor 31 sends downlink information to those UEs 10 selected in step S03 (that is, the UEs 10a, 10b kept connected to the base station 2). The processor 31 selects a UE 10 (e.g., UE 10a) to be a source (representative) of direct communication between the UEs from the UEs 10 kept connected to the base station 2 (UEs 10a, 10b). The direct communication between the UEs is wireless communication performed between the UEs 10 without going through the base station 2, and may include vehicle-to-vehicle (V2V) communication and vehicle-to-everything (V2X) communication. The processor 31 sends, to one or more UEs 10 located around the UE 10a and disconnected from the base station 2 in step S03 (e.g., UEs 10c, 10d), an instruction or request to spread (send) downlink information received from the base station 2. The instruction or request to spread downlink information may be sent either at the same timing as, or at a different timing from, the downlink information. For example, the processor 31 may send the instruction or request by adding, to the downlink information to be sent to the representative UE 10, flag information meaning "this information should be spread to (shared with) surrounding vehicles through direct communication between the UEs (vehicle-to-vehicle communication)." After step S05, the process returns to step S01.

In step S06, when the communication throttling control (communication throttling) of steps S03 to S05 is currently being performed, the processor 31 performs a process of stopping the communication throttling, and the process returns to step S01.

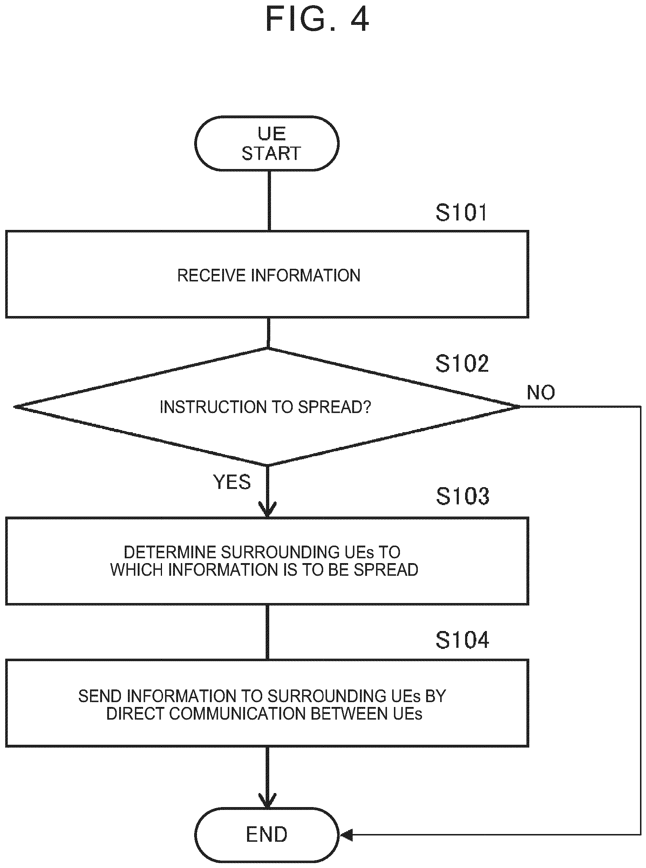

FIG. 4 is a flowchart of an example of a process in the UE 10. The process shown in FIG. 4 is performed by, for example, the processor 131 of the UE 10a. In step S101, the processor 131 receives information sent from the base station 2.

In step S102, the processor 131 determines whether the instruction or request to spread downlink information has been added to the information received from the base station 2. When the processor 131 determines that the instruction or request to spread downlink information has been added to the information received from the base station 2, the process proceeds to step S103. Otherwise, the process of FIG. 4 ends.

In step S103, the processor 131 determines the surrounding UEs 10 to which the information is to be spread. For example, the processor 131 may use a Proximity Service (ProSe) Direct Discovery process to detect other UEs 10 located near the UE 10a (e.g., UEs 10c, 10d) as receiving UEs 10.

In step S104, the processor 131 of the UE 10a sends the information to be sent to these UEs 10 through direct communication between the UEs (vehicle-to-vehicle communication). For example, a V2X communication procedure in broadcast mode via a PC5 reference point can be used for direct communication between the UEs.

The receiving UEs (UEs 10c, 10d) each determines a destination layer-2 ID for broadcast reception of the information. The transmitting UE (UE 10a) determines a source layer-2 ID and a destination layer-2 ID. At this time, the UE 10a determines the destination layer-2 IDs determined by the UEs 10c, 10d. The UE 10a sends a broadcast message including V2X data (information to be sent) using the source layer-2 ID and the destination layer-2 IDs. The UEs 10c, 10d receive the V2X data in the broadcast message based on the destination layer-2 IDs in the broadcast message. In this way, the UE 10a can spread the information received from the base station 2 to the UEs 10c, 10d disconnected from the base station 2.

The communication control device 20 according to the embodiment includes the processor 31 (control unit). The processor 31 performs communication throttling for the plurality of UEs 10 when the processor 31 makes at least one of the following determinations: the number of UEs 10 connected to the base station 2 is equal to or greater than the threshold, congestion has occurred in the base station 2, and traffic congestion has occurred in the area to which the base station 2 belongs. The communication throttling can reduce power consumption in the base station 2 etc.

The communication control device 20 (processor 31) can reduce the number of UEs connected to the base station 2 by the communication throttling. Reducing the number of UEs reduces the load related to communication, so that power consumption can be reduced.

The communication control device 20 (processor 31) can determine those UEs to be kept connected to the base station 2, based on information (such as SNR) indicating either or both of the distances between the base station 2 and the individual UEs 10 and the communication qualities between the base station 2 and the individual UEs 10.

The communication control device 20 (processor 31) can reduce the frequency of communication between each UE 10 subject to communication throttling and the base station 2. For example, the processor 31 can reduce the frequency of communication of the first information including the information related to the advanced driver-assistance systems (ADAS) of the vehicle 3 having the UE 10 mounted thereon.

The communication control device 20 (processor 31) can give (send) the first UE (e.g., UE 10a) selected from the UEs 10 connected to the base station 2 an instruction or request to reduce the frequency of sending information from the first UE (UE 10a) to the base station 2.

The communication throttling can be configured to be performed on a UE 10 within a range in which the quality of service (QoS) determined for that UE 10 is maintained.

The communication control device 20 (processor 31) can perform the communication throttling for non-real-time data.

The communication control device 20 (processor 31) can send, to at least one UE 10 kept connected to the base station 2 (e.g., UE 10a), an instruction to send information received from the base station 2 to those UEs 10 disconnected from the base station 2 (e.g., UEs 10c, 10d) through vehicle-to-vehicle communication. In response to the instruction, the processor 31 (control unit) of the UE 10a can send the information received from the base station 2 to the UEs 10c, 10d as instructed. This allows those UEs 10 disconnected from the base station 2 (whose connection to the base station 2 has been terminated) to obtain information.

The above embodiment and modifications are merely illustrative, and the present disclosure may be modified as appropriate without departing from the spirit and scope of the present disclosure. The processes and means described in the present disclosure can be combined as desired as long as no technical contradiction occurs.

The processes described as being performed by a single device may be performed in a distributed manner by a plurality of devices. The processes described as being performed by different devices may be performed by a single device. In a computer system, the hardware configuration (server configuration) that implements functions can be flexibly changed.

The present disclosure can also be implemented by supplying computer programs implementing the functions described in the above embodiment to a computer and causing one or more processors of the computer to read and execute the computer programs. Such computer programs may be provided to the computer by a non-transitory computer-readable storage medium that can be connected to a system bus of the computer, or may be provided to the computer via a network. Examples of the non-transitory computer-readable storage medium include: any type of disk or disc such as a magnetic disk (floppy (registered trademark) disk, hard disk drive (HDD), etc.) and an optical disc (compact disc read-only memory (CD-ROM), digital versatile disc (DVD), Blu-ray disc, etc.); and any type of medium suitable for storing electronic instructions such as a read-only memory (ROM), a random access memory (RAM), an erasable programmable read-only memory (EPROM), an electrically erasable programmable read-only memory (EEPROM), a magnetic card, a flash memory, and an optical card.

## Claims

1. A communication control device (20) comprising a processor (31) configured to perform communication throttling for a plurality of user equipments (10) when at least one of determinations is made, the determinations including:
the number of the user equipments (10) connected to a base station (2) being equal to or greater than a threshold;
occurrence of congestion in the base station (2); and
occurrence of traffic congestion in an area to which the base station (2) belongs.

2. The communication control device (20) according to claim 1, wherein the processor (31) is configured to reduce the number of the user equipments (10) connected to the base station (2) by the communication throttling.

3. The communication control device (20) according to claim 2, wherein the processor (31) is configured to determine the user equipment (10) to be kept connected to the base station (2), based on information indicating either or both of distances between the base station (2) and each of the user equipments (10), and communication qualities between the base station (2) and each of the user equipments (10).

4. The communication control device (20) according to any preceding claim, wherein the processor (31) is configured to reduce a frequency of communication between the user equipment (10) subject to the communication throttling and the base station (2).

5. The communication control device (20) according to claim 4, wherein
the processor (31) is configured to reduce the frequency of the communication of first information, and
the first information is at least one piece of information selected from the following pieces of information:
information related to advanced driver-assistance systems of a vehicle (3) on which the user equipment (10) is mounted;
information that is less important or urgent;
information that is less relevant to a location of the vehicle (3) on which the user equipment (10) is mounted; and
information whose freshness is not important.

6. The communication control device (20) according to claim 4 or claim 5, wherein the processor (31) is configured to give, to a first user equipment (10) selected from the user equipments (10), an instruction or request to reduce a frequency of sending information from the first user equipment (10) to the base station (2).

7. The communication control device (20) according to any preceding claim, wherein the communication throttling is configured to be performed within a range in which a quality of service determined for the user equipment (10) is maintained.

8. The communication control device (20) according to any preceding claim 1, wherein the processor (31) is configured to perform the communication throttling for non-real-time data.

9. The communication control device (20) according to claim 3, wherein the processor (31) is configured to send, to at least one user equipment (10) kept connected to the base station (2), an instruction or request to send information received from the base station (2) to the user equipment (10) disconnected from the base station (2), through direct communication between the user equipments (10).

10. A communication control method comprising performing communication throttling for a plurality of user equipments (10) by a communication control device (20) when at least one of determinations is made, the determinations including:
the number of the user equipments (10) connected to a base station (2) being equal to or greater than a threshold;
occurrence of congestion in the base station (2); and
occurrence of traffic congestion in an area to which the base station (2) belongs.

11. The communication control method according to claim 10, further comprising reducing the number of the user equipments (10) connected to the base station (2) by the communication throttling by the communication control device (20).

12. The communication control method according to claim 11, further comprising determining the user equipment (10) to be kept connected to the base station (2) by the communication control device (20), based on information indicating either or both of distances between the base station (2) and each of the user equipments (10), and communication qualities between the base station (2) and each of the user equipments (10).

13. The communication control method according to any of claims 10 to 12, further comprising reducing a frequency of communication between the user equipment (10) subject to the communication throttling and the base station (2) by the communication control device (20).

14. A non-transitory storage medium (32) storing instructions that are executable by one or more processors (31) and that cause the one or more processors (31) to perform the communication control method according to any of claims 10 to 13.

15. A user equipment (10) comprising a processor (131) configured to receive information from a base station (2), and
send, through direct communication between a plurality of the user equipments (10), the information received from the base station (2) to at least one user equipment (10) disconnected from the base station (2) out of the user equipments (10) by communication throttling, wherein
the user equipment (10) is selected as a user equipment (10) to be kept connected to the base station (2) from the user equipments (10) when at least one of determinations is made, the determinations including:
the number of the user equipments (10) connected to the base station (2) being equal to or greater than a threshold;
occurrence of congestion in the base station (2); and
occurrence of traffic congestion in an area to which the base station (2) belongs.
